Europäisches Patentamt

**European Patent Office**

Office européen des brevets

(11) Numéro de publication: **0 010 533**
**B1**

(19)

(12) **FASCICULE DE BREVET EUROPEEN**

(45) Date de publication du fascicule du brevet:
04.08.82

(51) Int. Cl.³: **B 60 C 3/00**, B 60 C 11/00

(21) Numéro de dépôt: 79870026.6

(22) Date de dépôt: 19.10.79

(54) Pneumatique perfectionné à usage agricole et forestier.

(30) Priorité: 19.10.78 BE 191204

(43) Date de publication de la demande:
30.04.80 Bulletin 80/9

(45) Mention de la délivrance du brevet:
04.08.82 Bulletin 82/31

(84) Etats contractants désignés:
AT CH DE FR GB IT LU NL SE

(56) Documents cités:
BE-A-871 370
DE-A-2 127 587
DE-A-2 340 761
FR-A-1 174 970
FR-A-1 452 787
FR-A-1 458 239
FR-A-2 249 778
FR-A-2 270 110
FR-A-2 377 893
US-A-1 862 269
US-A-2 477 754
US-A-3 247 880

(73) Titulaire: **OFFICE DE PROMOTION INDUSTRIELLE,**
**Square de Meeûs, 26, B-1040 Bruxelles (BE)**

(72) Inventeur: **Abeels, Pierre François Joseph, Prof. Dr. ir.,**
**Vieux chemin de Louvain, 11, B-5990 Hamme-Mille (BE)**

(74) Mandataire: **Van Malderen, Michel et al, p.a. Freylinger &**
**Associés 22 avenue J.S. Bach (bte 43), B-1080 Bruxelles**
**(BE)**

Pneumatique perfectionné à usage agricole et forestier

La présente invention se rapporte à des perfectionnements apportés à des pneumatiques à enveloppe souple, destinés à des tracteurs à usage agricole et forestier et véhicules tout terrain, en particulier aux roues motrices de tels tracteurs.

On sait que pour des applications à ce type de tracteurs, il convient de disposer de pneumatiques qui tout en offrant une bonne transmission du couple moteur appliqué permettent aussi de réduire les effets d'impacts ainsi que de tassement et de compactage du sol.

Divers moyens ont été utilisés pour accroître la transmission du couple moteur notamment diverses modifications apportées au dessin du pneu et tout particulièrement de la bande de roulement. On a ainsi notamment modifié le nombre, la disposition et la géométrie des barettes. Ces solutions n'apportent cependant qu'un avantage réduit et en principe ne modifient guère les effets mécaniques sur le sol.

Une autre approche consiste à monter des pneumatiques de grande largeur et/ou à monter des roues jumelées. Cependant, il en résulte des modifications d'équipement et des frais d'investissement importants rendant difficile une application généralisée de ces solutions.

La présente invention vise donc à fournir des pneumatiques de tracteur destinés à des usages agricoles et forestiers comportant des barettes, permettant de réaliser à la fois une bonne transmission du couple moteur tout en réduisant les effets mécaniques sur le sol. De plus, la solution retenue doit être réalisable sans modifications importantes de l'équipement.

Il est apparu que le but ainsi défini peut être atteint si le profil en travers du pneumatique est choisi de manière à réaliser un débordement de la bande de roulement par rapport au bord extérieur d'appui du talon du pneumatique à la jante d'au moins un quart et de préférence d'un tiers de la demi-largeur de la bande de roulement, et si également la chambre interne ou chambre à air délimitée par la bande de roulement et les deux flancs du pneumatique est inférieure à l'écartement entre les bords extérieurs d'appui des talons sur la jante afin que les flancs soient toujours bien soutenus. En ce qui concerne la première condition, les valeurs indiquées se rapportant à un pneumatique hors charge et monté sur sa jante.

On a constaté que les pneumatiques ainsi conçus permettent de distribuer régulièrement la charge sur la surface portante constituée par la surface de contact du pneumatique avec le sol tout en réduisant fortement les effets de compactage du sol et en assurant une transmission satisfaisante du couple moteur. Mécaniquement, les effets sont comparables à ceux observés pour une poutre en porte-à-faux sur deux appuis.

De plus, la limitation des dimensions de la chambre interne ou à air par rapport à la jante augmente considérablement la résistance des flancs et par conséquent la durée de vie du pneumatique.

On a déjà signalé, dans la littérature, des pneumatiques caractérisés par un profil transversal comportant un débordement de la bande de roulement par rapport au bord extérieur d'appui des talons à la jante d'au moins un quart, voire même d'au moins un tiers de la demi-largeur de la bande de roulement. On peut mentionner notamment le brevet FR-A-2 270 110 (PIRELLI) où cette condition selon les dessins est satisfaite dans un pneumatique de conception particulière mais n'est pas accompagnée de la deuxième condition prévue à la présente invention et qui est primordiale pour les types de pneumatiques utilisables pour les tracteurs et les véhicules tout terrain. Il en est de même du brevet FR-A n° 1 174 970 (RENAULT). Dans ces deux brevets antérieurs, la chambre interne déborde toujours le point d'appui des talons sur la jante de sorte que les flancs ne sont pas protégés avec l'efficacité obtenue suivant la présente invention. Le brevet US-A-2 477 754 (M. KRAFT) concerne un pneumatique particulier utilisable pour les roues arrière des avions de la marine militaire devant atterrir sur des porte-avions. Ce pneumatique doit être monté sur des jantes spécialement conçues, ce qui est incompatible avec l'objectif de l'invention. De plus le fonctionnement de ce pneumatique est différent car sa conception (cambrure et rebord important de la bande de roulement) entraîne une transmission et une concentration des charges via les rebords de la bande de roulement sur les larges épaulements prévus à cet effet sur les roues, alors que le pneu de l'invention est conçu au contraire pour distribuer la charge aussi régulièrement que possible sur toute la surface de contact avec le sol.

Le principe de réalisation de la présente invention est applicable à des pneumatiques à carcasse quelconque, notamment à carcasse radiale ou diagonale.

Le nombre de plis et le choix de la gomme répondent aux critères classiques et le fabricant peut opérer un choix en fonction des impératifs habituels.

La configuration de la bande de roulement et les sculptures qui y sont prévues sont, en principe, classiques.

La disposition, la géométrie et le nombre de barrettes sont choisis de manière expérimentale en tenant compte que pour une dimension de jante égale, la forme d'exécution conforme à l'invention offre une largeur de bande de roulement accrue si on la compare aux bandes de roulement des formes d'exécution classiques.

Les pressions du pneumatique seront celles conseillées par le fabricant compte tenu des charges supposées appliquées en évitant cependant des charges trop élevées qui provoqueraient une déformation trop importante du pneu pour la forme d'exécution spécifique propre à l'invention.

La réalisation pratique du débordement indiqué peut être obtenue en adaptant adéquatement le profil du pneumatique au cours de la fabrication.

Selon une forme d'exécution particulièrement préférée de l'invention, on prévoit en plus de la chambre à air principiale du penumatique, des chambres toriques indépendantes ou non, disposées dans les flancs, grace auxquelles il devient possible de raidir ou d'assouplir la paroi latérale du pneu.

Cette dernière conception permet par un choix adéquat de la pression dans la chambre principale et de celle régnant dans les chambres latérales, d'agir sur la pression appliquée au sol sur le travers de la bande de roulement afin de minimiser les différences d'effort appliqué et en conséquence de réduire les effets de compactage.

Il convient de noter que le principe de l'utilisation des chambres multiples pour des pneumatiques est bien entendu connu. On notera cependant que le but poursuivi est différent de celui de la présente invention et qu'en particulier une application à des tracteurs agricoles ou forestiers n'est pas envisagée et que surtout les chambres latérales ne sont pas prévues pour contribuer à l'élargissement de la bande de roulement par rapport à l'appui du talon sur la jante.

Le progrès technique obtenu selon l'invention provient de la simplicité et de l'efficacité des moyens mis en oeuvre qui ne nécessitent aucune modification du tracteur, exception faite d'un éventuel élargissement des garde-boues. De ce fait, un pneumatique selon l'invention de dimension appropriée peut être monté sans difficulté sur la jante normale du véhicule et confère à la fois une meilleure transmission du couple moteur et une réduction de l'effet de compactage.

Dans le cas où l'on a recours à des chambres latérales toriques dans les flancs, en complément à la chambre principale et indépendamment de celle-ci, on dispose de plus d'une possibilité simple et pratique d'adapter les conditions de gonflage des différentes chambres, notamment à la nature de terrain et éventuellement au type de travaux particuliers exécutés afin de réaliser le meilleur compromis entre la transmission du couple moteur et les effets mécaniques sur le sol.

Afin de pouvoir mieux comprendre l'invention, celle-ci sera décrite plus en détail ci-après en regard des dessins annexés qui sont donnés uniquement à titre d'illustration de l'invention.

Dans les dessins:

La fig. 1 représente le profil en coupe radiale d'un pneumatique conforme à l'invention;

La fig. 2 représente en regard d'un pneumatique normal (fig. 2a) et d'un pneumatique selon l'invention (fig. 2b), chaque fois le diagramme du compactage superficiel sous l'effet de la charge transmise par le pneumatique;

La fig. 3 représente une courbe granulométrique d'un sable sur lequel ont été effectués des essais de pénétration et

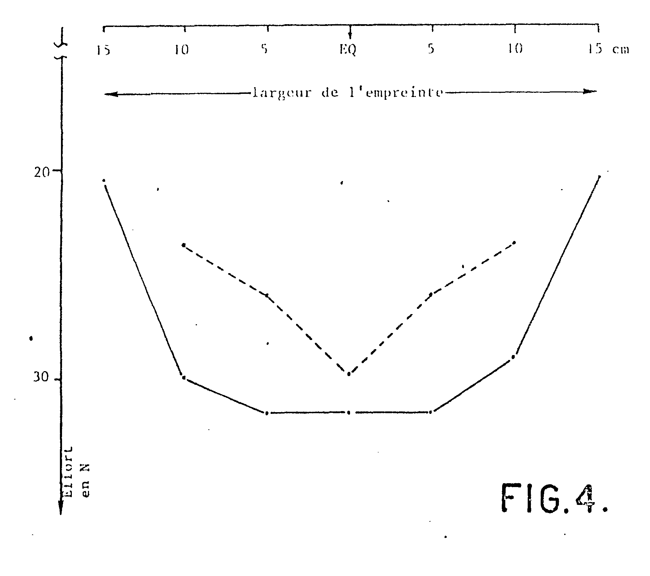

La fig. 4 représente le diagramme comparatif des efforts de étudiés sur le sable de la fig. 3 pour un pneu classique et un pneu conforme à l'invention.

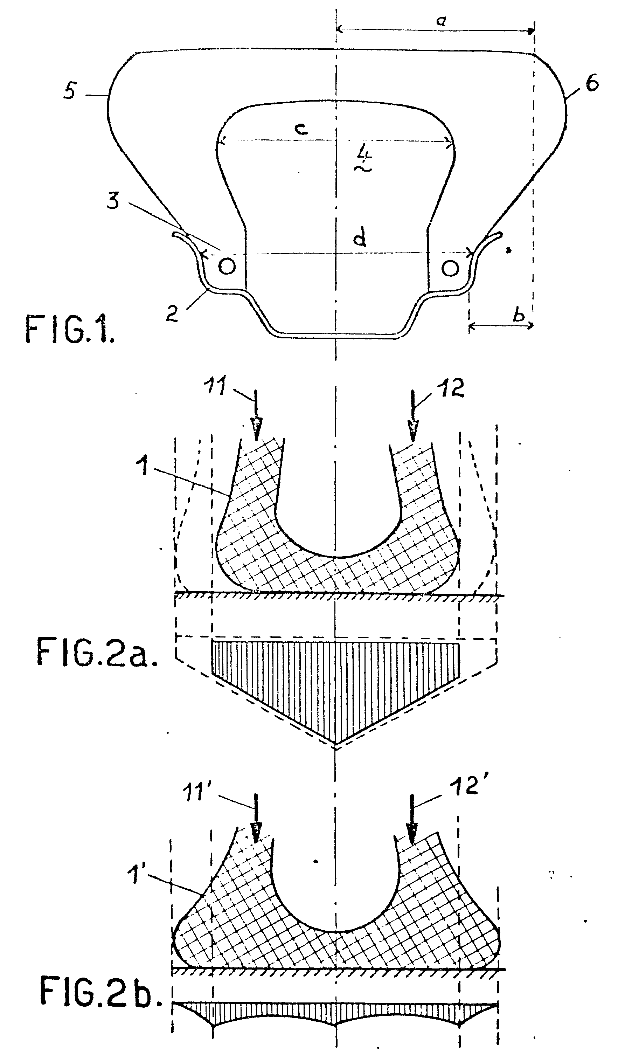

Dans la fig. 1, on a représenté schématiquement le profil d'un pneumatique 1 conforme à l'invention monté sur une jante 2; le plan équatorial du pneumatique 1 est représenté par un trait d'axe.

Dans la fig. 1, (a) représente la demi-largeur de la bande de roulement et (b) le débordement de la bande de roulement par rapport au bord extérieur du talon 3 du pneumatique à son point de contact avec la jante. Ce débordement (b) est au moins égal au quart de (a) et selon la caractéristique de l'invention la largeur maximale (c) de la chambre interne 4 du pneumatique délimité par la bande de roulement des flancs 5, 6 est inférieur à l'écartement (d) entre les bords extérieurs d'appui des talons 3 sur la jante 2 afin de soutenir les flancs 5, 6.

Les flancs 5 et 6 peuvent comporter chacun une ou plusieurs chambres latérales en communication ou non avec la chambre principale 4 du pneumatique. Dans le cas où ces chambres latérales sont indépendantes de la chambre principale, elles sont pourvues de moyens de gonflage séparés.

Dans la fig. 2a on a représenté en trait plein la forme d'un pneumatique classique 1 et sous celui-ci un diagramme représentant en fonction de la distance par rapport au plan équatorial du pneu, la compaction superficielle résultant de la charge représentée par les flèches 11 et 12.

On observe que le diagramme indique une distribution inégale de l'effet de compactage, le maximum de compactage étant réalisé au droit du plan équatorial du pneu.

Sur cette même figure on a représenté en pointillés un pneumatique de largeur accrue mais de forme semblable, correspondant à une largeur accrue de la jante. On constate que l'on obitent une distribution analogue dans le diagramme correspondant du compactage superficiel.

Dans la fig. 2b, on a représenté pour un pneumatique 1' selon l'invention et pour des charges 11' et 12' identiques aux charges 11 et 12, l'effet de compactage. L'allure générale du diagramme traduit une amélioration considérable de la distribution des charges résultant de la forme particulière du pneumatique, entraînant une réduction du compactage superficiel.

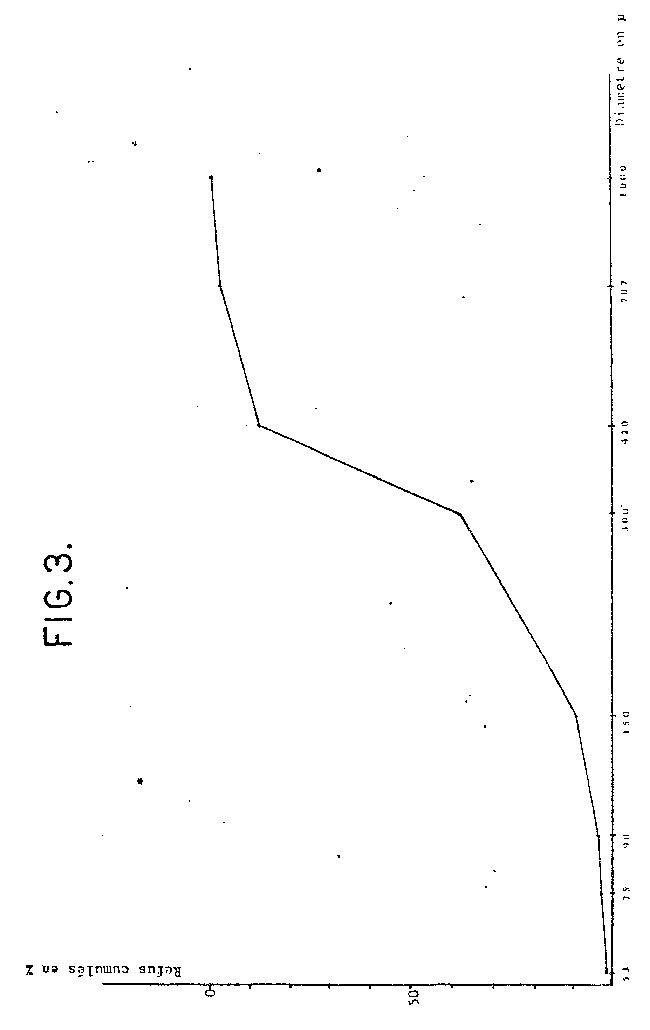

En ayant recours à un sable présentant la courbe granulométrique de la fig. 3 on a établi le diagramme des efforts de pénétration d'un pneumatique classique et d'un pneumatique selon l'invention. Pour effectuer cet essai, la roue est équipée d'un pneumatique et montée sur le moyeu d'un essieu. Il lui est appliqué une charge égale pour les deux pneumatiques étudiés et le support reçoit l'empreinte du pneu.

Le support est constitué par un sable sec conforme à la fig. 3 dans un conteneur de 2000 × 800 × 800 mm.

Une mesure des efforts d'enfoncement est exécutée et répétée en des points régulièrement distribués dans toutes les directions de l'empreinte. Le modèle de pénétromètre consiste en un cône de 6,4 mm de diamètre, de 60° d'ouverture au sommet et de 5 mm de haut. Les déterminations au pénétromètre sont exécutées manuellement à une vitesse d'enfoncement de ±3 cm/sec.

On mesure l'effort exprimé en Newton pour une pénétration du cône à 6 cm de profondeur, le diagramme représentant les efforts maximaux enregistrés au pénétromètre pour des parallèles à l'équateur du pneu et aux distances indiquées par rapport à cet équateur.

Les résultats expérimentaux obtenus par un pneu classique sont représentés en pointillés, le trait continu représentant les valeurs obtenues à l'aide d'un pneumatique conforme à l'invention.

Bien qu'on ait décrit des modes d'exécution particulièrement préférés de l'invention, il doit être bien entendu que celle-ci n'est pas limitée par ces formes d'exécution et que de nombreuses variantes peuvent être réalisées tout en restant dans le cadre du principe décrit.

## Revendications

1. Pneumatique à enveloppe souple comportant au moins une chambre interne équipé de barrettes, destiné à des tracteurs à usage agricole ou forestier, en particulier aux roues motrices de ces tracteurs, pouvant être monté sur une jante courante (2) et comprenant une bande de roulement, une paire de flancs (5, 6) raccordés aux bords de la bande de roulement et une paire de talons (3) prévue à l'autre extrémité des flancs (5, 6) pour le montage du pneumatique sur la jante (2), la bande de roulement présentant un débordement (b) par rapport au bord extérieur d'appui des talons (3) sur la jante (2) d'au moins un quart de la demi-largeur (a) de la bande de roulement, caractérisé en ce que la largeur maximale (c) de la chambre interne (4) du pneumatique délimitée par la bande de roulement et les flancs (5, 6) est inférieure à l'écartement (d) entre les bords extérieurs d'appui des talons (3) sur la jante (2) afin de soutenir les flancs (5, 6).

2. Pneumatique selon la revendication 1 caractérisé en ce qu'il comporte en plus d'une chambre interne principale (4), des chambres toriques latérales disposées de part et d'autre de cette chambre principale.

3. Pneumatique selon la revendication 2 caractérisé en ce que lesdites chambre principale sont indépendantes de cette dernière et munies de moyens de gonflage séparés.

## Patentansprüche

1. Reifen bestehend aus einem dehnbaren Mantel mit wenigstens einer inneren Kammer, wobei der Reifen mit Rippen vorgesehen ist, für Zugmaschinen der Land- und Forstwirtschaft, insbesondere für die Antriebsräder dieser Zugmaschinen, vorgesehen ist und auf einer üblichen Felge (2) montiert werden kann, aus einem Laufband, aus einem Paar Flanken (5, 6), die am Laufband anschließen, und aus einem Paar Ansätze (3), die am anderen Ende der Flanken (5, 6) vorgesehen sind und für das Aufbringen des Reifens auf der Felge (2) ausgelegt sind, wobei das Laufband um einen Abstand (b), der mindestens einem viertel der halben Breite (a) des Laufbandes entspricht, über den Rand des Ansatzes (3) auf der Felge (2) hinausragt, dadurch gekennzeichnet, daß die maximale Breite (c) der inneren Kammer (4) des Reifens, die durch das Laufband und durch die Flanken (5, 6) abgegrenzt ist, kleiner ist als der Abstand (d) zwischen den äußeren Kanten der Reifenansätze (3) auf der Felge (2), um die Flanken (5, 6) zu stützen.

2. Reifen nach Anspruch 1, dadurch gekennzeichnet, daß zusätzlich zu einer inneren Hauptkammer (4) auch torische Seitenkammern vorgesehen sind, die auf beiden Seiten der Hauptkammer liegen.

3. Reifen nach Anspruch 2, dadurch gekennzeichnet, daß die auf beiden Seiten der Hauptkammer liegenden torischen Seitenkammern von der Hauptkammer unabhängig sind und mit getrennten Aufblaswegen versehen sind.

## Claims

1. Tyre having a flexible envelope comprising an inner chamber and provided with lugs, intended for agricultural or foresty tractors, particularly for the driving wheels of the said tractors, which may be fitted on a conventionnal rim (2) and comprising a tread, a pair of sidewalls (5, 6) connected along the edges of the tread and a pair of beads (3) located on the other end of the sidewalls (5, 6) to fit the tyre on the rim (2), the tread having an extension (b) relatively to the outer edge on which the beads (3) of the tyre rest on the rim (2) of at least a quarter of half of the width (a) of the tread, characterized by the fact that the maximum width (c) of the inner chamber (4) of the tyre, defined by the tread and the sidewalls (5, 6) is less that the space (d) between the outer edges on which the beads (3) of the tyre rest on the rim (2) in order to sustain the sidewalls (5, 6).

2. Tyre according to claim 1, characterized by the fact that it comprises, besides a main inner chamber (4), side torical chambers located on both sides of the said mainchamber.

3. Tyre according to claim 2, characterized by the fact that the said torical side chambers located on both sides of the main chamber are independant of the latter and are provided with separated inflation means.

FIG.1.

FIG.2a.

FIG.2b.

FIG.3.

FIG.4.